# EUROPÄISCHE PATENTSCHRIFT

(11) **EP 1 683 662 B1**
(45) Veröffentlichungstag und Bekanntmachung des Hinweises auf die Patenterteilung: **06.02.2008**
(21) Anmeldenummer: 05025144.6
(22) Anmeldetag: 17.11.2005
(51) Int. Cl.: B60G 21/055, B60G 13/00

(54) **Haltevorrichtung für einen Stabilisator einer Radaufhängung**
Holding device for stabilizer of a wheel suspension
Dispositif de retenue pour un stabilisateur de suspension de roue

(30) Priorität: 21.01.2005 DE 102005002889
(43) Veröffentlichungstag der Anmeldung: 26.07.2006
(73) Patentinhaber: Dr.Ing. h.c. F. Porsche Aktiengesellschaft, 70435 Stuttgart (DE)
(72) Erfinder: Tardy-Tuch, Georg, 71272 Malmsheim (DE); Schulz, Achim, 75223 Niefern-Oeschelbronn (DE)

(56) Entgegenhaltungen:
- EP-A- 0 044 579
- DE-A1- 4 102 967
- DE-U1- 8 012 412
- DE-U1- 20 023 579
- GB-A- 2 197 268
- US-A- 4 784 406
- US-B1- 6 305 701
- PATENT ABSTRACTS OF JAPAN Bd. 2003, Nr. 08, 6. August 2003 (2003-08-06) -& JP 2003 118345 A (NISSAN MOTOR CO LTD), 23. April 2003 (2003-04-23)

## Beschreibung

Die Erfindung bezieht sich auf eine Haltevorrichtung für einen Stabilisator einer Radaufhängung eines Kraftfahrzeugs nach dem Oberbegriff des Patentanspruchs 1.

Aus der US 6,305,701 B1 ist ein Stabilisator mit einer Befestigung an einem Federbeinzylinder bekannt, wobei diese Befestigung aus einer Schelle besteht, die in einem Lager ein freies Ende des Stabilisators aufnimmt. Aus der JP 2003-118345 A ist ein Koppelelement an einem Federbein bekannt, wobei das Koppelelement endseitig mit einem Lager zur Aufnahme eines Stabilisators versehen ist. Das Koppelelement ist am unteren Ende des Federbeines angeordnet und weist zur Befestigung des Lagerelements übereinander angeordnete Schraubmittel auf.

Die Aufgabe der Erfindung besteht darin, eine Haltevorrichtung für einen Stabilisator zu schaffen, welche die zwischen Stabilisator und Federbein auftretenden Kräfte im Fahrbetrieb sicher überträgt.

Diese Aufgabe wird erfindungsgemäß durch den Patentanspruch 1 gelöst. Weitere vorteilhafte Merkmale beinhalten die Unteransprüche.

Die mit der Erfindung hauptsächlich erzielten Vorteile bestehen darin, dass der Stabilisator stabil und doch elastisch am Federbein befestigbar ist. Dies erfolgt insbesondere nach der Erfindung dadurch, dass mit dem Federbein ein Koppelelement über mindestens zwei zueinander beabstandete Befestigungen verbunden ist und am oder im Koppelelement eine Lageraufnahme für ein Stabilisatorlager vorgesehen ist und in diesem ein freies Ende des Stabilisators gehalten wird.

Damit eine stabile und sichere Befestigung an einer Federbeingabel sowie am Federbeinzylinder erfolgen kann, weist das Koppelelement eine L-Form auf und erstreckt sich von der einen Befestigung an einem Lagerauge der Federbeingabel am Radlenkerarm bis zu einer weiteren Befestigung an einer Konsole am unteren freien Ende des Federbeinzylinders. Insbesondere ist nach der Erfindung vorgesehen, dass das Koppelelement einen sich von der Befestigung bis zum freien Ende des Stabilisators erstreckenden Schenkel umfasst und eine hieran anschließende aufrechte Strebe aufweist, die sich bis zu der weiteren Befestigung an der Konsole am Federbeinzylinder erstreckt. Der Schenkel des Koppelelements ist etwa in einer Ebene mit dem Radführungslenkerarm angeordnet.

Durch diese Befestigung über die in einem Höhenabstand zueinander angeordneten Befestigungen ist das Koppelelement über eine große Basis an der Federbeingabel bzw. am Federbeinzylinder gehalten und es können maximale Belastungen optimal aufgenommen werden.

Die Lageraufnahme ist im eckseitigen Übergangsbereich vom Schenkel zur Strebe angeordnet und besteht aus einer Einformung im Koppelelement oder einer eingeschweißten Rohrbuchse. Bei einem aus einem Gussteil bestehenden Koppelelement kann die Lageraufnahme im Koppelelement eingeformt sein. Bei einer Blechkonstruktion ist die Rohrbuchse beispielsweise eingeschweißt, was aber auch bei einem Gussteil möglich ist. Durch eine Elastizität im Koppelelement und im Lager werden Relativbewegungen vom Federbein und vom Stabilisator zueinander ausgeglichen.

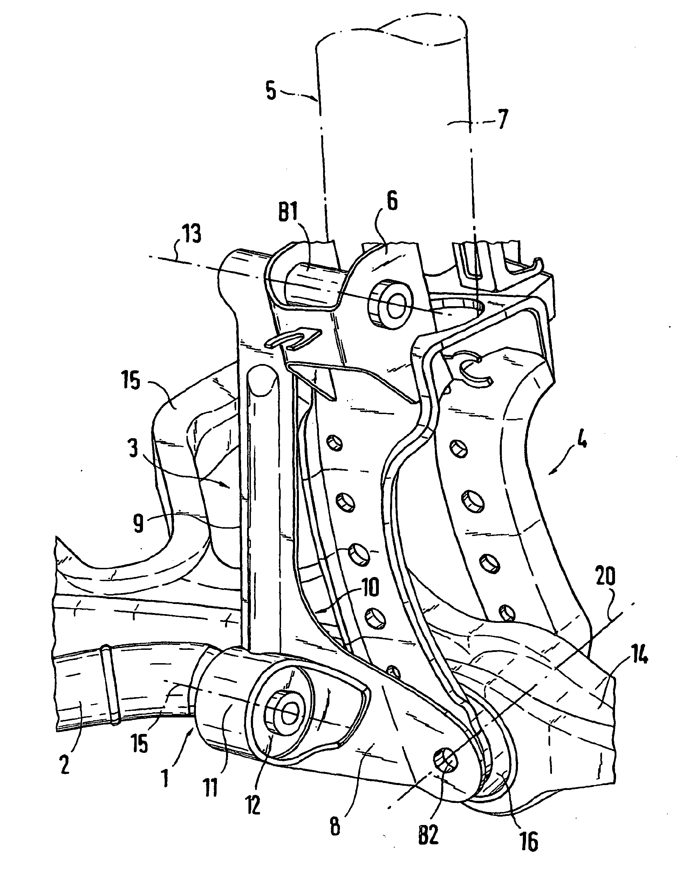

Ein Ausführungsbeispiel der Erfindung ist in der Zeichnung dargestellt und wird im Folgenden näher beschrieben.
Die Zeichnung zeigt in einer schaubildlichen Darstellung einen unterem einem Radführungslenker zugerichteten Teil eines Federbeines mit einer Federbeingabel und einem befestigten Koppelelement mit in diesem gelagerten Stabilisator.

Zur Lagerung jeweils eines freien Endes 1 eines quer im Fahrzeug angeordneten Stabilisators 2 dient ein Koppelelement 3, das mit einer Gabel 4 bzw. einem Gabelteil eines Federbeines 5 fest verbunden ist.

Das Koppelelement 3 ist über mindestens zwei Befestigungen B1 und B2, die in der Höhe beabstandet zueinander angeordnet sind, mit der Federbeingabel 4 und einer Konsole 6 verbunden, die am Federbeinzylinder 7 und/oder an der Federbeingabel 4 befestigt ist.

Das Koppelelement 3 weist eine L-Form mit einem etwa horizontal ausgerichteten Schenkel 8 und einer sich anschließenden etwa vertikalen Strebe 9 auf. Im Eckbereich, das heißt im Übergangsbereich 10 des Schenkels 8 in die Strebe 9 ist eine Lageraufnahme 11 für ein Stabilisatorlager 12 angeordnet, in dem das freie Ende 1 des Stabilisators 2 jeweils gelagert ist. Die Lageraufnahme 11 kann in das Koppelelement 4 eingeformt sein, beispielsweise bei einem Gussteil oder es wird eine eingeschweißte Rohrbuchse beispielsweise bei einer Blechkonstruktion verwendet.

Die erste Befestigung B1 weist eine Achse 13 auf, die in etwa zur Lagerachse 15 des Stabilisatorlagers 12 parallel verläuft. Die weitere Befestigung B2 weist eine Achse 20 auf, die zur Achse 13 der Befestigung B1 um 90° verdreht vorgesehen ist.

Die Federgabel 4 übergreift endseitig mit ihren beiden Gabelenden einen Arm 14 eines Radführungslenkers einer Radaufhängung. Die Lagerung 16 der Federgabel 4 an diesem Arm 14 wird gleichzeitig zur Befestigung des Koppelelements 3 an der Federgabel 4 verwendet.

Damit Relativbewegungen vom Federbein 5 und Stabilisator 2 zueinander ausgeglichen werden können, ist das Koppelelement 3 mit einer definierten Wandstärke versehen, durch welche dieses Element 3 eine entsprechende Elastizität aufweist, welche noch durch das elastische Stabilisatorlager 12 ergänzt wird. Bei einer Ausbildung des Koppelelements 3 als Gussteil wird dann die Elastizität vom Stabilisatorlager 12 alleine aufgebracht.

## Patentansprüche

1. Haltevorrichtung für einen Stabilisator (2) einer Radaufhängung eines Kraftfahrzeugs mit einer Lagerung an einem Federbein (5), wobei mit dem Federbein (5) ein Koppelelement (3) über Befestigungen verbunden ist und am oder im Koppelelement (3) eine Lageraufnahme (11) für ein Stabilisatorlager (12) vorgesehen ist und in diesem ein freies Ende (1) des Stabilisators (2) gehalten wird, **dadurch gekennzeichnet, dass** das Koppelelement (3) eine L-Form aufweist und sich von der Befestigung (B2) an einem Lagerauge (16) einer Federbeingabel (4) am Radführungslenkerarm (14) bis zu der weiteren Befestigung (B1) mit einer Konsole (6) am unteren freien Ende eines Federbeinzylinders (7) erstreckt und das Koppelelement (3) einen sich von der Befestigung (B2) bis zum freien Ende (1) des Stabilisators (2) erstreckenden Schenkel (8) und eine hieran anschließende aufrechte Strebe (9) aufweist, die sich bis zu der weiteren Befestigung (B1) an der Konsole (6) am Federbeinzylinder (7) erstreckt.

2. Haltevorrichtung nach Anspruch 1, **dadurch gekennzeichnet, dass** der Schenkel (8) des Koppelelements (3) etwa in einer Ebene mit dem Radführungslenkerarm (14) angeordnet ist.

3. Haltevorrichtung nach einem der vorhergehenden Ansprüche, **dadurch gekennzeichnet, dass** die Lageraufnahme (11) im eckseitigen Übergangsbereich (10) vom Schenkel (8) zur Strebe (9) angeordnet ist und aus einer Einformung im Koppelelement (3) oder einer eingeschweißten Rohrbuchse besteht.

4. Haltevorrichtung nach einem der vorhergehenden Ansprüche, **dadurch gekennzeichnet, dass** die Befestigung (B1) eine Achse (13) aufweist, die in etwa parallel zur Lagerachse (15) des Stabilisatorlagers (12) verläuft und die Achse (13) der Befestigung (B1) um 90° verdreht zur Achse (20) der Befestigung (B2) im Lagerauge (16) angeordnet ist.

5. Haltevorrichtung nach einem der vorhergehenden Ansprüche, **dadurch gekennzeichnet, dass** das Koppelement (3) aus einer Blechkonstruktion mit einer definierten Wandstärke und einer Eigenelastizität besteht, die von einer Elastizität des Stabilisatorlagers (12) überlagert ist.

## Claims

1. Holding device for a stabilizer (2) of a wheel suspension of a motor vehicle having a mounting on a spring strut (5), with a coupling element (3) being connected to the spring strut (5) by means of fastenings, and with a mount receptacle (11) for a stabilizer mount (12) being provided on or in the coupling element (3), and with a free end (1) of the stabilizer (2) being held in said stabilizer mount (12), **characterized in that** the coupling element (3) has an L-shape and extends from the fastening (B2) at a mount eye (16) of a spring strut fork (4) at the wheel control link arm (14) to the further fastening (B1) to a bracket (6) at the lower free end of a spring strut cylinder (7), and the coupling element (3) has a limb (8), which extends from the fastening (B2) to the free end (1) of the stabilizer (2), and an upright rod (9), which adjoins said limb (8) and extends to the further fastening (B1) at the bracket (6) on the spring strut cylinder (7).

2. Holding device according to Claim 1, **characterized in that** the limb (8) of the coupling element (3) is arranged approximately in a plane with the wheel control link arm (14).

3. Holding device according to one of the preceding claims, **characterized in that** the mount receptacle (11) is arranged in the corner transition region (10) from the limb (8) to the rod (9), and is composed of a moulding in the coupling element (3) or a welded-on tube sleeve.

4. Holding device according to one of the preceding claims, **characterized in that** the fastening (B1) has an axis (13) which runs approximately parallel to the mount axis (15) of the stabilizer mount (12), and the axis (13) of the fastening (B1) is arranged so as to be rotated 90° with respect to the axis (20) of the fastening (B2) in the mount eye (16).

5. Holding device according to one of the preceding claims, **characterized in that** the coupling element (3) is composed of a sheet metal construction with a defined wall thickness and an inherent elasticity on which is superposed an elasticity of the stabilizer mount (12).

## Revendications

1. Dispositif de fixation pour un stabilisateur (2) d'une suspension de roue d'un véhicule automobile avec un palier sur une jambe de force (5), un élément de couplage (3) étant assemblé via des fixations à la jambe de force (5) et un logement (11) de palier étant prévu sur ou dans l'élément de couplage (3) pour un palier (12) de stabilisateur et une extrémité libre (1) du stabilisateur (2) étant maintenue dans ledit logement, **caractérisé en ce que** l'élément de couplage (3) présente une forme de L et s'étend de la fixation (B2) à un oeil (16) du palier d'une fourche (4) de jambe de force à ressort sur le bras (14) d'une bielle de poussée de la roue jusqu'à l'autre fixation (B1) à une console (6) en l'extrémité inférieure libre d'un vérin (7) de jambe de force à ressort et l'élément de couplage (3) présente une branche (8) s'étendant de la fixation (B2) jusqu'à l'extrémité (1) libre du stabilisateur (2) et un étai (9) droit relié à ladite branche, qui s'étend jusqu'à l'autre fixation (B1) à la console (6) sur le vérin (7) de la jambe de force à ressort.

2. Dispositif de fixation selon la revendication 1, **caractérisé en ce que** la branche (8) de l'élément de couplage (3) est disposée environ dans un plan avec le bras (14) de la bielle de poussée de la roue.

3. Dispositif de fixation selon l'une quelconque des revendications précédentes, **caractérisé en ce que** le logement (11) du palier est disposé dans la zone de transition (10) angulaire de la branche (8) vers l'étai (9) et est constitué par un moulage dans l'élément de couplage (3) ou un manchon tubulaire soudé.

4. Dispositif de fixation selon l'une quelconque des revendications précédentes, **caractérisé en ce que** la fixation (B1) présente un axe (13), qui s'étend environ parallèlement à l'axe (15) du palier (12) du stabilisateur et l'axe (13) de la fixation (B1) est prévu avec un angle tourné de 90° par rapport à l'axe (20) de la fixation (B2) dans l'oeil (16) du palier.

5. Dispositif de fixation selon l'une quelconque des revendications précédentes, **caractérisé en ce que** l'élément de couplage (3) est constitué par une construction en tôle avec une épaisseur de paroi définie et une élasticité qui lui est propre, qui est superposée par une élasticité du palier (12) du stabilisateur.
